# EUROPEAN PATENT APPLICATION

(11) **EP 1 112 971 A1**
(43) Date of publication of application: **04.07.2001**
(21) Application number: 98945662.9
(22) Date of filing: 07.08.1998
(51) Int. Cl.: C02F 11/14, C10L 1/32

(54) **METHOD FOR PRODUCING A SULPHUR-FREE LIQUID ORGANIC FUEL**

(71) Applicant: Grudinin, Vladimir Pavlovich, Arkhangelsk, 163046 (RU); Grudinin, Alexandr Vladimirovich, Arkhangelsk, 163046 (RU); Antropov, Andrej Valerievich, Arkhangelsk, 163013 (RU)
(72) Inventor: Grudinin, Vladimir Pavlovich, Arkhangelsk, 163046 (RU); Grudinin, Alexandr Vladimirovich, Arkhangelsk, 163046 (RU); Antropov, Andrej Valerievich, Arkhangelsk, 163013 (RU)
(74) Representative: von Füner, Alexander, Prof.h.c. Dr.
(86) International application number: RU9800259
(87) International publication number: WO0007947

(57) **Abstract**

Suggested invention depicts method of obtaining liquid non-sulphuric organic fuel from waste products, formed after cleaning of industrial and residential drain water.

The method is performed as follows. Preliminary concentrated primary settlers sludge suspension, being waste products formed after cleaning of industrial and residential drain water, and excess activated sludge suspension, being waste product after biological cleaning of residential and industrial drain water, to be processed with coagulant, dehydrate to concentration 10-30 wt.-%, then hydrolyze, obtained hydrolyzate to be separated from undissolved part of sediment, then evaporated to concentration 65-80 wt.-% getting the desired product.

Suggested method allows to get high-mileage non-waste technology of obtaining liquid non-sulphuric organic fuel with high calorific power, its burning makes minimum dioxine content (1 pk for 1 cubic meter of gas at normal conditions), meeting the most harsh European standards (not more than 100 pk for 1 cubic meter of gas at normal conditions), as well as to completely utilize primary settlers sludge and excess activated sludge after biological cleaning of effluent.

## Description

The proposed innovation is related to the method of liquid nonsulfurous organic fuel making from wastes formed after treatment of industrial and domestic waste waters.

There is a number of methods for converting wastes formed after treatment of industrial and domestic waste waters into organic fuel.

There is a method of solid organic fuel making by mixing partly dewatered sludge of waste water with coal fines with its further complete dewatering, centrifuging and filtering /1/.

There is a method of organic fuel making by composting of solid organic wastes with the sludge formed after wastewaters treatment and its further mixing with petroleum oil or solid fuel /2,3/

There is a method of industrial and domestic waste waters processing into solid organic fuel. According to this method the crushed coal is loaded into the flotation cell together with waste waters containing organic substances. The flakes containing coal, produced in the upper part of the cell, are unloaded and dewatered completely /4/.

There is a method of domestic waste waters processing into liquid organic fuel by heating under pressure in a vacuum atmosphere with carbon monoxide and water /5/.

The drawbacks of the above methods are excessive capital and operating expenses on special equipment, additional petroleum and solid fuel consumption and secondary environmental pollution by wastes resulting from fuel burning in the form of non -salvageable ash and flue gas containing toxic substances.

The closest method to the proposed one is the method of liquid organic fuel making by partial pyrolysis of sludge formed after waste waters treatment, with gases forming. These gases are separated into condensate phase and gas phase by means of condensing equipment. The obtained liquid phase is separated into water and organic lays. The water lay is rectified for separation of soluted organic substances and then the resulting substances are united with the organic lay used as fuel. /6/

The drawbacks of this method are high power-consuming of the process, high capital expenses for special equipment, low fuel calorific efficiency and fair quantity of secondary wastes in the form of ash, sludge and smoke fumes containing toxic substances, in particular dioxines in smoke gases /6/.

The proposed innovation is to create a high efficient method of liquid nonsulfurous organic fuel producing that complies with ecological standards for toxic substances content in wastes after fuel burning and that has high thermal and physical characteristics.

This problem is solved in the following way. The previously packed mixture of sludge slip in presettling tanks, being the wastes from domestic and industrial waste waters treatment process, and.excess activated sludge slip, being the wastes after domestic and industrial waste waters biological treatment, are treated by coagulant, then dewatered to the density of 10-30 wt.-% and hydrolyzed. The resulting hydrolyzate is separated from the insoluble part of sludge and evaporated to the density of 65-80 wt.-% with end product formation.

The proposed method is different from the known one because here the previously packed mixture of sludge slip in presettling tanks and excess activated sludge slip is used as the feed stock. Besides the feed stock treatment is carried out by its coagulation, dewatering to the density of 10-30 wt.-% with its further hydrolyze, separation of the resulting hydrolyzate from the insoluble part of sludge and its evaporating to the density of 65-80 wt.-%.

The sludge of the presettling tanks and the excess activated sludge are unavoidable and undesirable wastes from domestic and industrial waste waters treatment process. The wastes are formed in the following way.

Domestic and industrial effluents are fed into the presettling tanks where the clarified water is separated from the primary sludge. Then the clarified water is fed for biological treatment. Biological treatment products are settled in the secondary settling tanks where the clarified water is separated from the excess activated sludge slip. Then the excess activated sludge is subjected to dewatering, drying and burning. In this case the salvage of the wastes in presettling tanks and excess activated sludge burning products is a serious problem /7/.

The proposed innovation helps to completely solve the problem of salvage of wastes from industrial and domestic waste waters treatment.

The excess activated sludge is an amorphous paste-like sludge with moistness of 99,0-99,9 wt.-% and consists of bioorganic part (accumulation of bacteria, fungi and organic compounds that has not undergone bio decomposition). This part constitutes not less than 83 wt.-% from solid residual and sludge in the form of fibre and different solid substances.

The sludge of the presettling tanks has the following characteristics.
Sludge moistness- 65%.
Sludge density- 1,1 t/m³.
Sludge ash content - 10-35%.
Calorific efficiency of absolutely dry mass - 3500-4500 cal/kg.
Organic substances content - 40-80%.
Total nitrogen content of dry mass - 1,5-2,4%.
Metals content in dry substance: Mg and V - 10-400 mg/kg, Pb and Hg - 10-20 mg/kg, Si - 200-1000 mg/kg.
Hydrogen sulphide content in dry substance - 10 mg/kg, phosphate content 300-1000 mg/kg and sulphate content - 100-970 mg/kg.
The suldge organic part is well hydrolyzed in alkalis and acids.

According to the proposed method the previously packed mixture of the sludge slip in presettling tanks and the excess activated sludge slip is subjected to coagulant treatment. Any traditional reagents, such as iron chlorid (II), lime or high-molecular compounds are used as coagulants. Then the sludge dewatered to the density of 10-30 wt.-% is subjected to acid or alkaline hydrolyze. Mineral acids (for example sulphuric or sulphur acids) or sodium sulphite are usually used as acid hydrolyze reagents. Alkaline hydrolyze may be carried out by sodium hydroxide treatment.

The packed mixture of presettling tanks sludge and the excess activated sludge treatment process by acid or alkaline reagents is accompanied with hydrolyze of bioorganic sludge part with resulting amino acids or their sodium salines (68-76 wt.-% from total quantity of hydrolyzate organic substances), containing mainly valine, leucine, norleucine, lysine, methionine and phenylalanine, carboxylic acids sodium salines such as acetic, propionic, isobutyric and isovaleric acids (10-14 wt.-%), and phenolic derivatives (about 3 wt.-%) and ether-soluble neutrals (5-19 wt.-%).

Preliminary processing of wastage mix after water treatment by densification, coagulation and further dehydration to density 10-30 wt.-% hydrolysis efficiency, which results in practically overall solution of part of bioorganic mud. Undissolved large fibers and solid particulate matters, which are present in small element in excess activated sludge, must separated from alkali hydrolysate as a sludge by means of sedimentation.

It is preferred to perform hydrolysis at temperature 20 -70 °C during not less than 15 minutes using reagents in amount of 35 -70 kg/ t (of absolutely dry substance).

It is preferred to process primary settlers sludge suspension mixture and excess activated sludge suspension in mass ratio 1:3 correspondingly.

In the preferred method of implementation of the invention, undissolved sludge, obtained at the stage of hydrolysis, must be mixed with evaporated hydrolysate, thus getting the desired product as fuel with increased calorific power. Besides, this method gives the opportunity to completely utilize primary settlers sludge and excess activated sludge after biological cleaning of effluent. Compliance to all the standards mentioned above at making of nonsulfurous organic fuel results in possibility of 2 seconds period in flame at temperature 1000-1200 °C during burning of fuel at heavily alkali medium. It minimizes dioxin content in fume gases, which corresponds to the most harsh European standards.

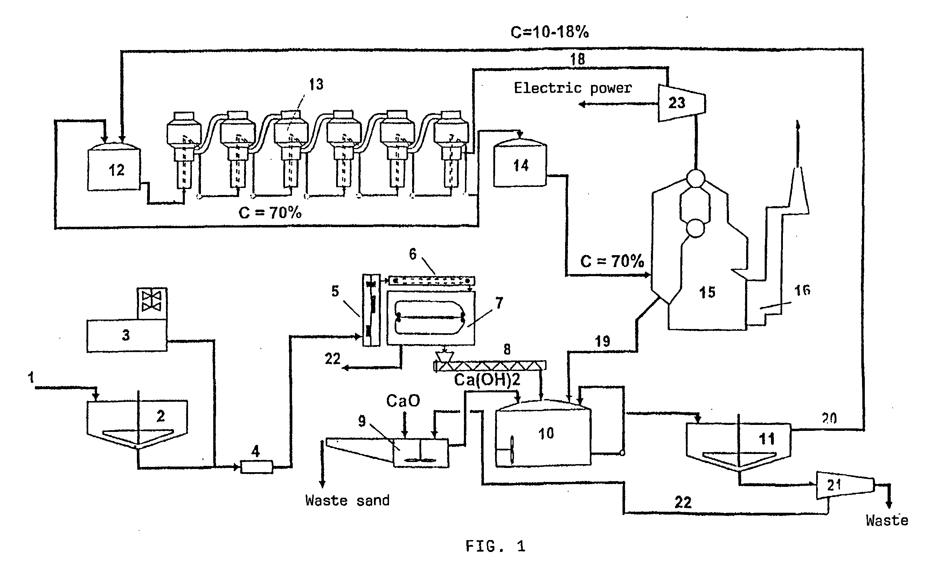

In fig.1 there is a circuit diagram of fluid nonsulfurous organic fuel making. The indications are as follows: 1 - primary settlers suspension mixture and excess activated sludge mixture; 2 ― concentration tank; 3 ― coagulant unit; 4 ― blender; 5 ― reactor; 6 ― table; 7 ― press; 8 ― auger; 9 ― solvent tank; 10 ― dampener sorting machine; 11 ― suspension particles separator; 12 ― centrifugal machine; 13 ― purified hydrolyzate; 14 ― hydrolyzate tank; 15 ― evaporator system; 16 ― organic fuel tank; 17 ― sodoregenerating unit; 18 ― turbogenerator; 19 ― saline melting; 20 ― electric filter; 21 ― chimney.

The method is as follows.
Sludge and sediment mixture (1) with concentration 0,5 ―1,0 wt.-% (considering absolutely dry substance) goes to concentration tank (2), where it is concentrated up to 2-3 wt.-% (considering absolutely dry substance). Concentrated sludge and sediment mixture and coagulant, delivered from coagulant unit (3) go to blender (4). Mixture of concentrated sludge, sediment and coagulant is delivered to press (7) table (6) through reactor (5). In press mixture is dehydrated to 10-30 wt.-% (considering absolutely dry substance). From press by means of auger (8) mixture is delivered to resin solvent tank (9), whereto out of dampener sorting machine lime milk /Ca(OH)3/ is delivered, fuel ash residue melt /K6CO3/ comes from boiling unit furnace. Solvent tank (9) is equipped with blender and circulation pump for intensive mixing of lime sludge. After caustization /NazCOs + Ca(OH)2 = NAOH + CaCOs/ and hydrolysis sludge is pumped off through heater to suspension particles separator (11) from hydrolyzate. Sediment and non-hydrolyzed residue go to flushing centrifugal machine (12), hydrolyzate (13) goes to hydrolyzate tank (14). Dirt from centrifugal machine goes to waste pile, fugat goes to dampener (10) to slake lime. Hydrolyzate from tank (14) goes to evaporator system (15) to be evaporated to concentration 65-80 wt.-% and stored as liquid organic fuel in the tank (16).

It is preferred that evaporated hydrolyzate to be mixed with undissolved residue, obtained at hydrolyzation stage.

Liquid organic fuel may be used in the following way. Liquid organic fuel is pumped through the heater in sodoregenerating unit (17) furnace. Fuel organic part is burned out and forms vapour. High pressure vapour goes turbogenerator (18) and further to evaporator system (15), as well as for power production for residential purposes. Ash residue (19) as saline melt goes to solvent tank (9). Furnace gases from sodoregeneration furnace (17) go through electrical filter (20) and are thrown to the open air through chimney (21). Dioxine content in waste gases is 1 pg for 1 cubic meter at normal conditions. In case of acid hydrolysis method of obtaining of liquid non-sulphuric organic fuel differs not much from the above mentioned. The only difference is that dehydrated residue and acid reagent go to blender for acid hydrolysis. Further processing must be performed in the same manner as said above.

### Example.

Primary settlers sludge suspension and excess activated sludge suspension mixture in mass ratio 1:3 correspondingly, concentration 0,5 wt.-% (concerning absolutely dry substance) to be preliminary concentrated to 3 wt.-%. Then chloric iron to be added as coagulant, mix everything, from blender through reactor deliver press to dehydrate to 20 wt.-%. Obtained sediment to be processed with sodium hydroxide in amount of 35 kg/t (considering absolutely dry substance) during 45 minutes at temperature 25 °C. Then non-hydrolyzed part of residue must be eliminated, obtained alkali hydrolyzate must be evaporated to concentration 65 wt.-%, its calorific power, which makes 4350 kcal/kg, must be determined.

Suggested method allows to get high-mileage non-waste technology of obtaining liquid non-sulphuric organic fuel with high calorific power, its burning makes minimum dioxine content (1 pg for 1 cubic meter of gas at normal conditions), meeting the most harsh European standards (not more than 100 pg for 1 cubic meter of gas at normal conditions), as well as to completely utilize primary settlers sludge and excess activated sludge after biological cleaning of effluent.

### LIST OF LITERATURE

1. Great Britain patent No. 1465869, C 10 L 5/46, 1977;
2. Great Britain patent No. 1551019, C 10 L 5/46, 1979;
3. Great Britain patent No. 1551020, C 10 L 5/46, 1979;
4. Great Britain patent No. 2162196, C 10 L5/46, 1986;
5. USA patent No. 3733255, C 10 b 57/00, 1970;
6. USA patent No. 4344770, C 10 L 1/00, 1982;
7. O. Yakovleva, N. Tkatchenko. Drain water cleaning. "Timber industry", Moscow, 1975, pp. 41-33.

## Claims

1. Method of liquid non-sulphuric organic fuel obtaining, including waste processing after cleaning of utility and industrial drain water differs so that preliminary concentrated primary settlers sludge suspension and excess activated sludge suspension mixture is processed with coagulant, hydrated to concentration 10-30 wt.-% and hydrolyze. Obtained hydrolyze to be separated from undissolved part of sediment and evaporated to concentration 65-80 wt.-% getting the desired product.

2. Method depicted in i.1 differs so that mass ratio of primary settlers sludge suspension and excess activated sludge suspension makes 1:3.

3. Method depicted in i. 1 or i. 2 differs so that undissolved part of sediment obtained at hydrolyzation stage must be mixed with evaporated hydrolyzate getting the desired product.
